# EUROPÄISCHE PATENTSCHRIFT

(11) **EP 1 986 909 B1**
(45) Veröffentlichungstag und Bekanntmachung des Hinweises auf die Patenterteilung: **27.05.2009**
(21) Anmeldenummer: 07721928.5
(22) Anmeldetag: 14.02.2007
(51) Int. Cl.: B62D 25/24

(54) **KAROSSERIEDICHTUNG LENKSÄULENDURCHFÜHRUNG**
CHASSIS SEAL FOR A STEERING COLUMN DUCT
TRAVERSÉE D'UNE COLONNE DE DIRECTION ASSURANT L'ÉTANCHÉITÉ VIS-À-VIS D'UNE CARROSSERIE

(30) Priorität: 25.02.2006 DE 102006008849
(43) Veröffentlichungstag der Anmeldung: 05.11.2008
(73) Patentinhaber: Ford-Werke GmbH, 50735 Köln (DE); Pass-Gummiwerke GmbH & Co. KG, 58332 Schwelm (DE)
(72) Erfinder: ASSMANN, Birger, 51399 Burscheid (DE); SICKERT, Dirk, 50321 Brühl (DE); BRAUN, Markus, 51447 Köln (DE); HEIDEL, Joachim, 34132 Kassel (DE)
(74) Vertreter: Wettlaufer, Frank
(86) Internationale Anmeldenummer: PCT/DE2007/000311
(87) Internationale Veröffentlichungsnummer: WO 2007/095911

(56) Entgegenhaltungen:
- EP-A- 0 968 900
- DE-A1- 19 524 175
- DE-A1- 19 632 431
- US-A- 2004 256 849
- US-A1- 2005 076 604
- US-B1- 6 695 374

## Beschreibung

Die Erfindung betrifft ein Dichtungssystem zum Abdichten einer in einen Innenraum eines Kraftfahrzeugs führenden Öffnung zur Durchführung einer Lenkeinrichtung, die ein Lenkgehäuse aufweist.

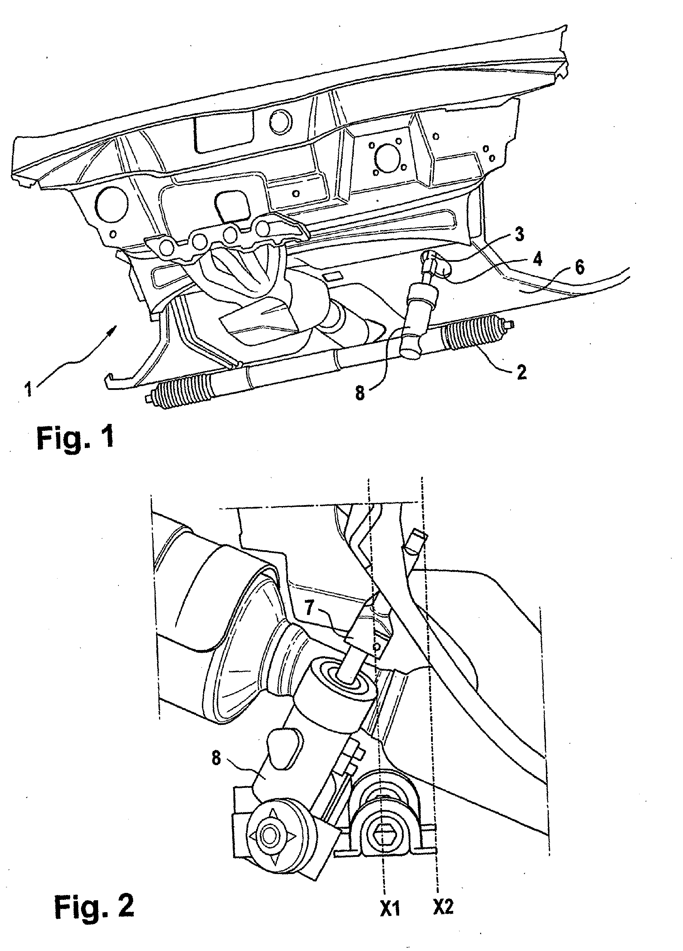

Derartige Dichtungssysteme sind beispielsweise zum Durchführen von Lenkeinrichtungen bzw. Lenksäulen durch eine Trennwand zwischen einem Motorraum und dem Fahrzeuginnenraum eines Kraftfahrzeugs bekannt. Die Öffnung befindet sich normalerweise in einem Fußraumbereich auf der Fahrerseite des Kraftfahrzeuges (siehe auch Figur 1). Diese Öffnung muss abgedichtet werden, damit Umwelteinflüsse wie Wasser, Lärm oder dergleichen nicht auf den Fahrer einwirken können, oder in den Innenraum gelangen können.

Bisher wurden hierfür Dichtungen verwendet, die als Ringdichtungen ausgeführt sind, also eine Öffnung in der Mitte aufweisen, durch die eine Lenkgetriebeverlängerung bzw. ein Ritzelschaft hindurchgeführt wird. Die Dichtung selber befindet sich im Eingriff mit der Trennwand. Die Dichtung kann auf die Verlängerung bzw. auf den Ritzelschaft aufgesteckt werden.

Nachteilig bei der bekannten Anordnung ist, dass beim Aufstecken der Dichtung als solche äußerste Sorgfalt walten gelassen werden muss, da sie exakt auf dem Lenkgestänge platziert werden muss, damit eine Abdichtung der Öffnung ordentlich erfolgen kann. Des Weiteren ist es nachteilig, dass ein Verrutschen der Dichtung auf dem Gestänge während des Betriebs des Fahrzeugs möglich ist, so dass unzureichende Abdichtungswirkungen auftreten können. Beispielweise kann dann Wasser in den Innenraum eintreten.

US 20040256849 A1 offenbart ein Dichtungssystem gemäß dem Obergegriff des Anspruchs 1.

EP 0968900 A1 offenbart eine kraftformschlüssige Verbindung zwischen einem Lenkgehäuse und einem Dichtungssystem.

Die DE 25 13 050 offenbart einen Lenkstockschalter für Kraftfahrzeuge. An einem Schaltergehäuse ist eine Lagerhülse angeordnet, die am Umfang verteilte Ansätze trägt. Die Ansätze sind in L-förmige Bajonettverschlussaufnahmen an der Stirnseite eines Lenkrohrs einführbar und durch Verdrehung der Lagerhülse festlegbar. An der Lagerhülse ist eine Rastfeder mit Rastansatz ausgespart, der nach der Verdrehung der Lagerhülse in einen Durchbruch des Lenkrohrs einrastet.

Die DE 39 23 982 A1 betrifft eine Energieabsorbierende Einrichtung an der Lenkeinrichtung eines Kraftfahrzeuges mit einem Druckring. Ein Führungsrohr ist bajonettverschlussartig mit einem Lagergehäuse verrastet.

Die DE 196 32 431 beschäftigt sich mit einer Anordnung zum Abdichten einer Öffnung in einer Karosseriewand, durch der Ritzelschaft eines Lenkgetriebes hindurchgeführt ist. Die Dichtungsanordnung weist im Wesentlichen einen Balg, einen Führungskörper und einen Gegenkörper auf. Der Führungskörper und der Gegenkörper sind bajonettartig miteinander gekoppelt.

Der Erfindung liegt die Aufgabe zugrunde, ein Dichtungssystem der Eingangs genannten Art mit einfachen Mitteln dahingehend zu verbessern, dass dieses auch nach langer Betriebszeit des Kraftfahrzeugs ortstabil bleibt, wobei das Dichtungssystem zugleich leicht montierbar sein soll.

Erfindungsgemäß wird die Aufgabe durch die Merkmale des Anspruchs 1 gelöst.

Als kraftformschlüssige Verbindung im Sinne der Erfindung wird eine Verbindung angesehen, die ein ungewolltes Lösen der beiden in gegenseitigem Eingriff stehenden Verbindungspartner verhindert. Zum gewollten Lösen der Verbindung müssen die beiden Verbindungspartner zunächst außer Eingriff gebracht werden, so dass die Verbindung zerstörungsfrei lösbar ist.

Durch den Führungskanal, der einen definierten Aufbringweg garantiert, ist es auf einfache Weise möglich, die Dichtung bzw. das Dichtungssystem auf dem Lenkgehäuse aufzubringen. Das Dichtungssystem ist aufgrund der kraftformschlüssigen Verbindung mit dem Lenkgehäuse lagestabil fixiert, wodurch ein Verrutschen auch nach langer Betriebszeit des Kraftfahrzeugs vermieden ist.

Zweckmäßig im Sinn der Erfindung ist, wenn dem Lenkgehäuse an diametral gegenüberliegenden Seiten jeweils eine Nase zugeordnet ist. Die Nasen weisen eine Höhe von bevorzugt zwei bis drei Millimetern auf, wobei die beiden Nasen in ihrer Dimension vorzugsweise unterschiedlich ausgeführt sein können. Beispielweise können die Nasen zylinderförmig mit unterschiedlichen Durchmessern und unterschiedlichen Höhen ausgeführt sein. Selbstverständlich wäre bei zwei Nasen auch ein zweiter Führungskanal vorhanden, der an die jeweilige Ausgestaltung der entsprechenden Nase angepasst ist. Durch die unterschiedliche Ausgestaltung der Nasen bzw. Führungskanäle ist sichergestellt, dass das Dichtungssystem im Zusammenspiel mit dem entsprechend angepassten Führungskanal in einer einzigen Montageposition mit dem Lenkgetriebe verbindbar ist. Dies ist vorteilhaft, da die Öffnung in der Trennwand meist oval, bzw. rotationsunsymmetrisch ausgeführt ist. Durch die einzig mögliche Montageposition wird dem Rechnung getragen, so dass die Öffnung durch das Dichtungssystem stets abgedeckt ist.

Günstig im Sinne der Erfindung ist, wenn das Dichtungssystem einen Rahmen aufweist, der von einer Dichtung umgeben ist. Die Dichtung ist dabei bevorzugt spritztechnisch auf den Rahmen aufgebracht. Die Dichtung besteht beispielsweise aus einem gummiartigen Kunststoff, und überragt den Rahmen mit Fortsätzen in Richtung zum Lenkgehäuse. Die Fortsätze können auch als Lippen bezeichnet werden, wobei diese an dem Lenkgehäuse anliegen.

In einer erfindungsgemäßen Ausgestaltung weist der Rahmen eine im Wesentlichen trichterförmige Ausgestaltung mit einem Befestigungsbereich und einem Anlagebereich auf. Der Befestigungsbereich ist an die Ausgestaltung des Lenkgehäuses angepasst, und weist den auf, wobei natürlich jeder Nase ein entsprechender Führungskanal zugeordnet ist. Der Befestigungsbereich geht in den Anlagebereich über, der dichtend an der Trennwand anliegt bzw. damit dichtend verbindbar ist. Selbstverständlich ist der Anlagebereich an die Ausgestaltung der Öffnung in der Trennwand angepasst, so dass diese stets hinreichend abdichtbar ist. Durch den Rahmen wird ein definierter Aufbau der Dichtung möglich, wobei die Stabilität der Dichtung bei optimaler Dichtungswirkung erhöht wird. Auch kann fertigungstoleranzunabhängig ein konstanter Dichtungsdruck zwischen den abzudichtenden Bereichen erreicht werden.

Vorteilhaft ist des Weiteren, dass die Dichtung aus einem gummiartigen Kunststoff, bevorzugt einem thermoplastischen Elastomer, besonders bevorzugt einem thermoplastischen Ethylen hergestellt ist. Derartige Kunststoffe sind temperaturstabil gegen die im Motorraum, also im Trennwandbereich, auftretenden Temperaturen von 120°C als Dauerbelastung bzw. 135°C als Kurzzeitbelastung und erzielen gleichzeitig eine hinreichende Abdichtung gegenüber Umwelteinflüssen wie Feuchtigkeit/Nässe, Gase, Schmutz etc. und Lärm bzw. Vibrationen (Noise Vibration Harshness (NVH)). Eine Haltbarkeit der Dichtung von beispielsweise mehr als 240000km Laufleistung des Kraftfahrzeugs ist erreichbar, wobei das Dichtungssystem über die gesamte Laufleistung des Kraftfahrzeugs lagestabil, also Verrutschsicher an dem Lenkgehäuse fixiert ist und die Öffnung stets hinreichend abdichtet.

Weiterhin ist vorteilhaft, wenn der Rahmen aus einem Hartplastik oder Leichtmetall, besonders bevorzugt Aluminium oder einer Kombination davon, hergestellt ist.

Vorteilhaft ist auch, dass der bzw. die Führungskanäle jeweils das Sperrelement aufweisen, wodurch die Nase(n) nach Erreichen einer Sollposition innerhalb des Aufnahmebereiches ortsfest gehalten wird, und es möglich ist, die Dichtung definiert aufzubringen, da das Überschreiten des Sperrelements für die Montageperson vernehmbar, beispielsweise hörbar ist.

Mittels der erfindungsgemäßen Ausgestaltung wird auf einfache und sichere Weise eine vibrationsdämmende und Umwelteinflüsse ausschaltende Abdichtung der Öffnung bereitgestellt wird, die die für den zuvor genannten Stand der Technik genannten Nachteile überwindet.

Vorteilhaft ist, wenn es sich bei dem Lenkgehäuse um ein Metallgehäuse handelt, welches besonders bevorzugt ein Stahlintegralgehäuse ist. Auf derartigen Gehäusen lässt sich auf einfache Weise die mindestens eine Nase anordnen. Bei der mindestens einen Nase handelt es sich vorteilhafterweise um einen am Lenkgehäuse befindlichen Stift, der besonders bevorzugt ein integraler Bestandteil des Lenkgehäuses ist und durch Tiefziehen hergestellt ist. Durch das Tiefziehen lassen sich wartungsarme Verbindungen im Zusammenhang mit der Dichtung herstellen, die sicherstellen, dass die Lebensdauer der Bauteile auch für hohe Betriebszeiten bzw. Laufleistungen der Kraftfahrzeuge ausgelegt ist.

Weitere Vorteilhafte Ausgestaltungen der Erfindung sind in den Unteransprüchen und der folgenden Figurenbeschreibung offenbart. Es zeigen:
- Fig. 1: eine perspektivische Ansicht in einen Motorraum von unten in Richtung auf eine Trennwand,
- Fig. 2: eine perspektivische Darstellung als Detailvergrößerung aus Figur 1,
- Fig. 3: eine Prinzipdarstellung eines Dichtungssystems,
- Fig. 4: eine Schnittansicht entlang der Linie X-X aus Fig. 3, und
- Fig. 5: eine perspektivische Seitenansicht des Dichtungssystems im montierten Zustand.

In den unterschiedlichen Figuren sind gleiche Teile stets mit denselben Bezugszeichen versehen, weswegen diese in der Regel auch nur einmal beschrieben werden.

Figur 1 zeigt eine perspektivische Ansicht eines Motorraumes 1 eines Kraftfahrzeuges. Ein Lenkgetriebe 2 ist mittels eines Ritzelschafts 3 durch eine Öffnung 4 in einer Trennwand 6 in einen nicht dargestellten Innenraum des Kraftfahrzeugs geführt. Die Trennwand 6 trennt den Motorraum 1 von dem nicht dargestellten Innenraum, und kann auch als Spritzwand bezeichnet werden. Dem Ritzelschaft 3 ist eine Verdickung 7 zugeordnet. Die Verdickung 7 ist etwas unterhalb der Öffnung 4 angeordnet (Figur 2). Der Ritzelschaft 3 überträgt Lenkbewegungen (z.B. mechanische Rotation) eines nicht dargestellten Lenkrades zum Lenkgetriebe 2. Der Ritzelschaft 3 mündet mit seinem unteren Ende in einem Lenkgehäuse 8. Das Lenkgehäuse 8 ist beispielsweise aus Stahl hergestellt.

Wie der Figur 2 deutlich entnommen werden kann, ist die Öffnung 4 mit einem beispielhaften Öffnungsbetrag ausgeführt, welcher durch die beiden Linien X1 und X2 beispielhaft dargestellt ist.

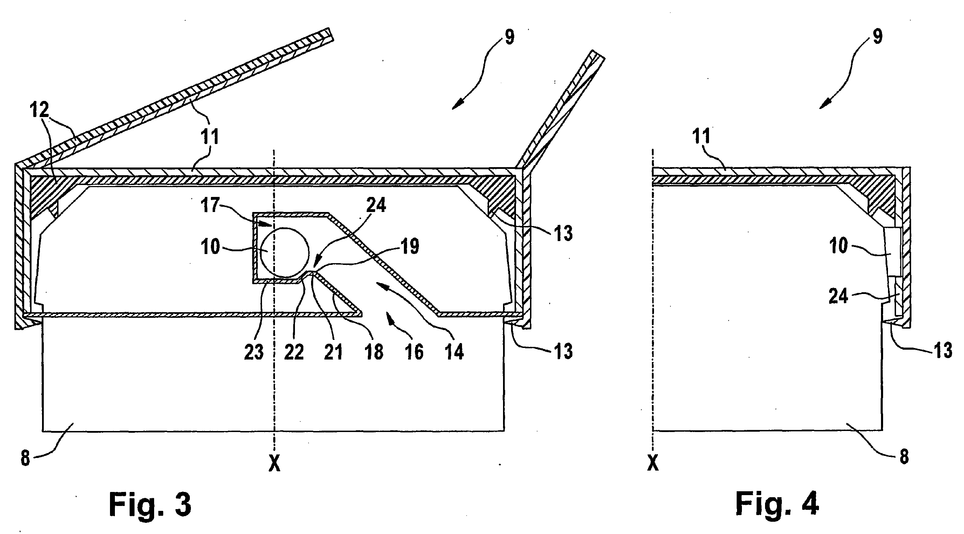

Figur 3 zeigt eine Prinzipdarstellung eines Dichtungssystems 9 zur Abdichtung der Öffnung 4 bzw. der Trennwand 6 zum Lenkgehäuse 8.

Das Lenkgehäuse 8 ist in Figur 3 in einer Seitenansicht dargestellt, und weist zumindest eine seitliche Nase 10 auf. Auf der nicht dargestellten diametral gegenüberliegenden Seite des Lenkgehäuses 9 kann ebenfalls eine Nase angeordnet sein. Die Nase 10 weist eine Höhe von etwa zwei bis drei Millimeter auf, wobei die beiden Nasen 10 in ihrer Dimension unterschiedlich sein können. Beispielweise können die Nasen 10 zylinderförmig mit unterschiedlichen Durchmessern und Höhen ausgeführt sein.

Das Dichtungssystem 9 weist einen Rahmen 11 auf, der von einer Dichtung 12 umgeben ist. Die Dichtung 12 kann beispielsweise spritztechnisch auf dem Rahmen 11 aufgebracht sein, und besteht z.B. aus einem gummiartigen Kunststoff, bevorzugt einem thermoplastischen Elastomer, bzw. einem thermoplastischen Ethylen.

Die Dichtung 12 überragt den Rahmen 11 mit Fortsätzen 13, die auch als Lippen bezeichnet werden können, in Richtung zum Lenkgehäuse 8, so dass die Fortsätze 13 mit ihren freien Enden an dem Lenkgehäuse 8 dichtend anliegen. Damit ist das Dichtungssystem 9 zum Lenkgehäuse 8 abgedichtet.

Der Rahmen 11 weist einen Führungskanal 14 auf. Der Führungskanal 14 erstreckt sich von seiner Einführöffnung 16 in dem dargestellten Ausführungsbeispiel von einer unteren Zeichnungsebene schräg nach oben verlaufend in Richtung zur Linie X. Der Führungskanal 14 mündet in einen Aufnahmebereich 17, der in der Seitenansicht gesehen im Wesentlichen quadratisch ausgeführt ist.

Eine in der Zeichnungsebene gesehen untere Wand 18 des Führungskanals 14 geht an ihrem oberen Ende 19 in einen im wesentlichen waagerechten Wandabschnitt 21 über, der in einen zur unteren Wand 18 entgegengesetzt geneigten Wandabschnitt 22 übergeht. Der geneigte Wandabschnitt 22 erstreckt sich von den waagerechten Wandabschnitt 21 geneigt in Richtung zur unteren Zeichnungsebene und in Richtung zur Linie X, und geht in einen unteren, waagerechten Wandabschnitt 23 des Aufnahmebereichs 17 über. Der geneigte Wandabschnitt kann auch als Sperrelement 24 bezeichnet werden, und bildet quasi eine Erhöhung oder Stufe.

Zur Montage des Dichtungssystems 9 an dem Lenkgehäuse 8 wird die Nase 10 durch den Führungskanal 14 zum Aufnahmebereich 17 geführt, wobei die Nase 10 über die Erhöhung bzw. Stufe in den Aufnahmebereich 17 eingeführt wird. Nach passieren der Erhöhung bzw. Stufe wird die Nase 10 leicht vernehmbar, beispielsweise hörbar in dem Aufnahmebereich 17 aufgenommen. Die Nase 10 liegt dabei mit einem Teil ihres Umfangs an dem Sperrelement 24 in einer Sollposition an, wodurch leicht vorstellbar ist, dass das Sperrelement 24 ein ungewolltes Lösen der Nase 10 aus dem Aufnahmebereich 17 verhindert. Somit ist das Dichtungssystem 9 kraftformschlüssig mit dem Lenkgehäuse 8 verbunden. Zur Verbindung wird das Dichtungssystem 9 auf das Lenkgehäuse 8 aufgesteckt und entsprechend dem Verlauf des Führungskanals 14 folgend zwangsverdreht. Oberhalb der Nase 10 ist ein Freiraum zur Wand des Aufnahmebereiches 17 ausgebildet, so dass genügend Raum zum gewollten Lösen der kraftformschlüssigen Verbindung vorhanden ist.

An der nicht dargestellten bzw. verdeckten Seite des Lenkgehäuses 8 ist die zweite Nase 10 angeordnet, welche zur dargestellten Nase 10 unterschiedlich beispielsweise mit einem größeren Durchmesser ausgeführt ist. Natürlich weist das Dichtungssystem 9 einen daran angepassten Führungskanal 14 mit Aufnahmebereich 17 auf, der ein entsprechend ausgeführtes Sperrelement 24 aufweist.

Der Rahmen 11 stellt somit eine Trennwand- bzw. Spritzwandabdichtung dar, die auf die Nase 10 aufsteckbar und drehbar ist, so dass die Nase 10 in dieser festlegbar ist. Dadurch, dass zwei bevorzugt direkt gegenüberliegende, unterschiedlich ausgeführte Nasen 10 und entsprechend ausgeführte Führungskanäle vorgesehen sind, kann das Dichtungssystem 9 nur in einer einzigen vorgegebenen Position und Richtung mit dem Lenkgehäuse 8 verbunden werden. Das Dichtungssystem 9 erstreckt sich von dem Lenkgehäuse 8 in Richtung zur Trennwand 6 bzw. zur Spritzwand und ist hier in geeigneter Weise mit dieser verbunden, beispielsweise verklebt.

In Figur 4 ist eine Schnittansicht entlang der Linie X-X aus Figur 3 dargestellt.

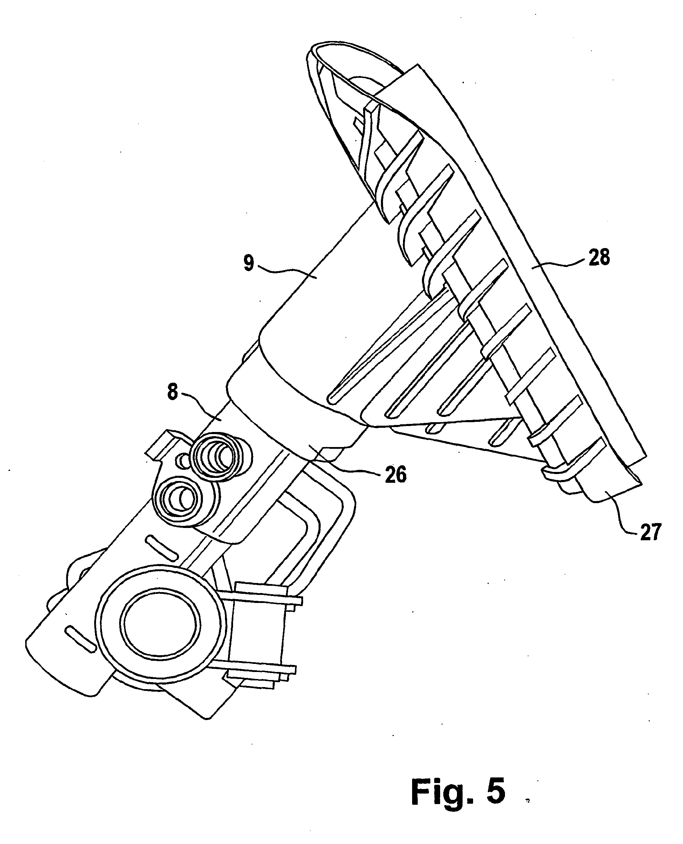

Figur 5 zeigt, dass sich das Dichtungssystem 9 beispielhaft im Wesentlichen trichterförmig von dem Lenkgehäuse 8 in Richtung zur in Figur 5 nicht dargestellten Trennwand erstreckt, um hier die Öffnung gegen Umwelteinflüsse abzudichten. Der Figur 5 ist zu entnehmen, dass das Dichtungssystem 9 einen an das Lenkgehäuse 8 angepassten Befestigungsbereich 26 und einen an die Öffnung 4 angepassten Anlagebereich 27 aufweist. In dem Befestigungsbereich 26 sind die an die Nasen 10 angepassten Führungskanäle 14 angeordnet. In dem Anlagebereich 27 ist eine Art Dichtlippe 28 angeordnet, welche das Dichtungssystem 9 nach oben hin etwas überragt. Mit der Dichtlippe 28 kann das Dichtungssystem 9 in die Öffnung 4 dichtend eingreifen, oder an deren Umfang dichtend anliegen. Denkbar ist, dass die Dichtlippe 28 flexibel bzw. nachgiebig ausgeführt ist.

Mittels des Zusammenspiels der Nase(n) 10 mit dem Dichtungssystem 9 bzw. mit dem Sperrelement 24 (Figur 4) ist das Dichtungssystem 9 quasi unter Vorspannung mit der Nase 10 bzw. mit dem Lenkgehäuse 8 verbunden, so dass quasi eine "Konstant-Druck-Befestigung" der Spritzwandabdichtung zum Lenkgehäuse 8 zur Verfügung gestellt wird, welche im Hinblick auf notwendige Toleranzen robuster als bekannte Aufpresslösungen ist.

Als Hauptfunktion wird angesehen, dass der Motorraum des Kraftfahrzeugs beispielsweise gegen Wasser oder Wärme zum Innenraum hinreichend abgedichtet ist. Weiter erlaubt die vorteilhafte Ausgestaltung Verbesserungsmöglichkeiten, wenn das Kraftfahrzeug z.B. im freien Gelände (Off road) eingesetzt wird, wobei zudem Lärmbelastungen verringert werden.

Vorteilhaft ist weiter, dass keine Relativbewegungen der Spritzwandabdichtung zum Ritzelschaft 3 auftreten. Denn der Ritzelschaft 3 ist im Motorraum vollständig vom dem Dichtungssystem 9 umgeben (Figur 5). Der Ritzelschaft 3 und das Dichtungssystem 9 sind so gesehen voneinander getrennt, so dass eine Abdichtung zu einem rotierenden Bauteil (Ritzelschaft 3) entfällt. Günstig ist weiterhin, dass die erfindungsgemäße Ausgestaltung in der Lage ist, dynamische Relativbewegungen des Lenkgetriebes zur Karosserie aufzunehmen. Beispielsweise können Zug- und Druckkräfte und Rotationskräfte aufgenommen werden, ohne dass die Dichtwirkung beeinträchtigt wird.

Vorteilhaft ist auch, dass die Spritzwandabdichtung auch nach langer Lebensdauer des Kraftfahrzeugs an seinem einmal installierten Ort verbleibt, es sei denn Inspektionen erfordern einen Austausch.

Durch das Zusammenspiel der Nase bzw. der Nasen mit dem Dichtungssystem 9 bzw. dem Führungskanal 14 ist das Dichtungssystem 9 leicht aufsteck- und drehbar mit dem Lenkgehäuse 8 verbindbar, wobei selbst bei einer Vorfertigung eine hinreichende Verbindung zur Verfügung gestellt wird, die gegen ungewolltes Lösen gesichert ist. Insofern kann das Dichtungssystem 9 an einem externen Ort mit dem Lenkgehäuse 8 vorgefertigt werden und als Einheit zum Montageort transportiert werden.

## Patentansprüche

1. Dichtungssystem zum Abdichten einer in einen Innenraum eines Kraftfahrzeugs führenden Öffnung (4) zur Durchführung eines Lenkgetriebes (2), dass ein Lenkgehäuse (8) aufweist, **gekennzeichnet durch** zumindest einen dem Dichtungssystem (9) zugeordneten Führungskanal (14), der in einen Aufnahmebereich (17) zur Aufnahme zumindest einer am Lenkgehäuse (8) angeordneten Nase (10) mündet, so dass das Dichtungssystem (9) kraftformschlüssig mit dem Lenkgehäuse (8) verbindbar ist, wobei der Aufnahmebereich (17) ein Sperrelement (24) aufweist, und **durch** einen Befestigungsbereich (26) und einen Anlagebereich (27), wobei der Befestigungsbereich (26) an das Lenkgehäuse (8) und der Anlagebereich im wesentlichen an die Öffnung (4) angepasst ist, und wobei der Befestigungsbereich (26) den Führungskanal (14) mit dem Aufnahmebereich (17) aufweist.

2. Dichtungssystem nach Anspruch 1, **dadurch gekennzeichnet, dass** dem Lenkgehäuse (8) an diametral gegenüberliegenden Seiten jeweils eine Nase (10) zugeordnet ist.

3. Dichtungssystem nach Anspruch 1 oder 2, **gekennzeichnet durch** einen Rahmen (11) der von einer Dichtung (12) umgeben ist, wobei die Dichtung (12) den Rahmen (11) mit Fortsätzen (13) überragt, und wobei die Fortsätze (13) an dem Lenkgehäuse (8) anliegen.

4. Dichtungssystem nach einem der Ansprüche 1 bis 3, **dadurch gekennzeichnet, dass** an dem Lenkgehäuse (8) zwei diametral gegenüberliegende Nasen (10) angeordnet sind, die unterschiedlich zueinander dimensioniert sind, wobei den beiden Nasen (10) entsprechend angepasste Führungskanäle (14) zugeordnet sind, so dass das Dichtungssystem in einer einzigen Montageposition mit dem Lenkgehäuse (8) lagestabil verbindbar ist.

5. Dichtungssystem nach einem der Ansprüche 3 oder 4, **dadurch gekennzeichnet, dass** die Dichtung (12) aus einem gummiartigen Kunststoff besteht.

6. Dichtung nach einem der Ansprüche 3 bis 5, **dadurch gekennzeichnet, dass** der Rahmen (11) aus einem Hartplastik besteht.

## Claims

1. Sealing system for sealing off an opening (4) which leads into an interior of a motor vehicle for the passage of a steering gear (2) which has a steering housing (8), **characterised by** at least one guide channel (14) which is associated with the sealing system (9) and opens into a receiver region (17) for receiving at least one lug (10) which is arranged on the steering housing (8) so that the sealing system (9) can be connected in a force- and form-fitting manner to the steering housing (8), with the receiver region (17) having a locking element (24), and by a fastening region (26) and a bearing region (27), with the fastening region (26) being adapted to the steering housing (8) and the bearing region being essentially adapted to the opening (4), and with the fastening region (26) having the guide channel (14) with the receiver region (17).

2. Sealing system according to Claim 1, **characterised in that** a lug (10) is associated in each case on diametrically opposite sides with the steering housing (8).

3. Sealing system according to Claim 1 or 2, **characterised by** a frame (11) which is surrounded by a seal (12), with the seal (12) projecting beyond the frame (11) with extensions (13), and with the extensions (13) bearing against the steering housing (8).

4. Sealing system according to one of Claims 1 to 3, **characterised in that** two diametrically opposite lugs (10) are arranged on the steering housing (8), which lugs are dimensioned differently from each other, with correspondingly adapted guide channels (14) being associated with the two lugs (10) so that the sealing system can be connected in a positionally stable manner to the steering housing (8) in a single installation position.

5. Sealing system according to one of Claims 3 or 4, **characterised in that** the seal (12) consists of a rubber-like plastic.

6. Sealing system according to one of Claims 3 to 5, **characterised in that** the frame (11) consists of a hard plastic.

## Revendications

1. Système d'étanchéité pour l'étanchéité d'une ouverture (4) allant dans un espace intérieur d'un véhicule automobile pour la réalisation d'un mécanisme de direction (2), qui présente un boîtier de direction (8), **caractérisé par** au moins un canal de guidage (14) attribué au système d'étanchéité (9), lequel canal débouche dans une zone de logement (17) pour le logement d'au moins un ergot (10) disposé sur le boîtier de direction (8), de sorte que le système d'étanchéité (9) peut être relié par complémentarité de forme et adhérence avec le boîtier de direction (8), la zone de logement (17) présentant un élément de blocage (24), et par une zone de fixation (26) et une zone d'application (27), la zone de fixation (26) étant adaptée au boîtier de direction (8) et la zone d'application étant adapté sensiblement à l'ouverture (4), et la zone de fixation (26) présentant le canal de guidage (14) avec la zone de logement (17).

2. Système d'étanchéité selon la revendication 1, **caractérisé en ce que** à chaque fois un ergot (10) est attribué au boîtier de direction (8) sur des côtés diamétralement opposés.

3. Système d'étanchéité selon la revendication 1 ou 2, **caractérisé par** un cadre (11) qui est entouré d'un joint (12), le joint (12) dépassant du cadre (11) avec des appendices (13), et les appendices (13) s'appliquant sur le boîtier de direction (8).

4. Système d'étanchéité selon l'une quelconque des revendications 1 à 3, **caractérisé en ce que** sur le boîtier de direction (8) sont disposés deux ergots (10) diamétralement opposés, qui sont dimensionnés différemment les uns des autres, des canaux de guidage (14) adaptés en conséquence étant attribués aux deux ergots (10), de sorte que le système d'étanchéité peut être relié dans une unique position de montage avec le boîtier de direction (8) de façon stable en position.

5. Système d'étanchéité selon l'une quelconque des revendications 3 ou 4, **caractérisé en ce que** le joint (12) est à base d'un plastique de type caoutchouc.

6. Système d'étanchéité selon l'une quelconque des revendications 3 à 5, **caractérisé en ce que** le cadre (11) est à base d'un plastique dur.
